# EUROPÄISCHE PATENTANMELDUNG

(11) **EP 1 788 358 A1**
(43) Veröffentlichungstag der Anmeldung: **23.05.2007**
(21) Anmeldenummer: 06450163.8
(22) Anmeldetag: 13.11.2006
(51) Int. Cl.: G01C 22/02, G01C 21/16, G01P 3/44, G07B 15/00

(54) **Verfahren und Anordnung zur Fahrzeug-internen Ermittlung eines von einem Fahrzeug zurückgelegten Weges**

(30) Priorität: 17.11.2005 DE 102005054899
(71) Anmelder: Efkon Mobility GmbH, 13355 Berlin (DE)
(72) Erfinder: Lydike, Matthias, 12526 Berlin (DE)
(74) Vertreter: Sonn & Partner Patentanwälte

(57) **Zusammenfassung**

Verfahren und Anordnung zur Fahrzeug-internen Ermittlung eines von einem Fahrzeug, das von einem Verbrennungsmotor (2) angetrieben wird und ein Stufengetriebe aufweist, zurückgelegten Weges (s), wobei Beschleunigungswerte mit Hilfe eines dreidimensionalen Beschleunigungssensors erfasst und daraus unter Anwendung von Signal-Integration der Weg berechnet wird; mit Hilfe des Beschleunigungssensors werden die Kolbenbewegungen des Verbrennungsmotors erfasst und aus diesen vergleichsweise hochfrequenten Signalen zufolge der Kolbenbewegungen wird die jeweilige Motor-Drehzahl (DZ) ermittelt, von der mit Hilfe der Gangzahl bzw. über Getriebe-Kennlinien die Fahrzeug-Geschwindigkeit (v) ermittelt wird, aus der schließlich durch Integration der Weg (s) berechnet wird.

## Beschreibung

Die Erfindung betrifft ein Verfahren zur Fahrzeug-internen Ermittlung eines von einem Fahrzeug, das von einem Verbrennungsmotor angetrieben wird und ein Stufengetriebe aufweist, zurückgelegten Weges, wobei Beschleunigungswerte mit Hilfe eines vorzugsweise dreidimensionalen Beschleunigungssensors erfasst und daraus unter Anwendung von Signal-Integration der Weg berechnet wird.

Weiters bezieht sich die Erfindung auf eine Anordnung zur Fahrzeug-internen Ermittlung eines von einem Fahrzeug, das von einem Verbrennungsmotor angetrieben wird und ein Stufengetriebe aufweist, zurückgelegten Weges, mit einem vorzugsweise dreidimensionalen Beschleunigungssensor und mit Integriermitteln zur Berechnung des Weges auf Basis der Beschleunigungs-Signale.

Der Wegermittlung vorhergehend wird dabei auch die Geschwindigkeit des Kraftfahrzeuges ermittelt.

Informationen über gefahrene Wegstrecken und Geschwindigkeiten werden in Kraftfahrzeugen üblicherweise mittels Sensoren gewonnen, die entweder am Getriebe oder an den Rädern angebracht sind. Sie detektieren die Drehbewegung eines Teils, dessen Drehzahl proportional zur gefahrenen Geschwindigkeit ist, und geben entsprechende Impulse ab. Diese Impulse werden über im Fahrzeug verlegte Kabel zu den Anzeigegeräten (z. B. Tachometer) und Verarbeitungsgeräten (z. B. Fahrtenschreiber, ABS-Steuergerät) geleitet.

In den letzten Jahren sind zunehmend neue Dienste in Fahrzeugen aufgenommen worden, die die Zuführung eines Signals erfordern, das die momentane Fahrzeug-Geschwindigkeit und/oder die gefahrene Wegstrecke repräsentiert. Beispiele hierfür sind: Flottenmanagement; Zielführung (Navigation); und Berechnung, Erfassung und Abrechnung von Straßenbenutzungs-Gebühren (automatisches Mautsystem). Inbesondere bei einer Nachrüstung von Fahrzeugen für die genannten Dienste ist es nachteilig, dass wesentlich in die im Fahrzeug vorhandene Verkabelung eingegriffen werden muss, um das Wegimpulssignal an die entsprechenden Geräte heranzuführen.

In der DE 197 48 127 A ist eine Navigationseinrichtung beschrieben, die auch ohne einen herkömmlichen, über ein Kabel angeschlossenen und außerhalb des Navigationsgeräts befindlichen Wegmesser eine zuverlässige Ortsbestimmung ermöglicht. Dabei wird ein Beschleunigungssensor verwendet, der die Beschleunigung in der Fahrzeug-Längsrichtung misst. Durch zweimalige Integration des Ausgangssignals dieses Sensors wird eine Information über den zurückgelegten Weg gewonnen. Der Abgleich des Offsets und des Skalierungsfaktors des Beschleunigungssensors wird in dieser Anordnung durch die Einbeziehung weiterer Signale von Neigungs- und Drehraten-Sensoren sowie der von einem GPS-Empfänger gelieferten Geschwindigkeits-Daten vorgenommen. Nachteilig hierbei ist, dass die Gesamteinrichtung in ein gemeinsames Gerät integriert sein muss und das so erzeugte Weg-/Geschwindigkeitssignal entweder anderen Geräten gar nicht oder nur über zusätzliche Kabel zur Verfügung steht. In letzterem Fall müsste an dem beschriebenen Navigationsgerät eine geeignete, möglichst standardisierte Schnittstelle zur Verfügung gestellt werden.

Aus der DE 103 40 053 A ist ein Verfahren zur Bestimmung des Fahrgeschwindigkeitsvektors in einem Kraftfahrzeug bekannt, wobei während der normalen Fahrt von Radsensoren und von einem Drehratensensor gelieferte Daten zur Ermittlung der vektoriellen Geschwindigkeit verwendet werden: In Situationen, in denen diese Daten die wirkliche Fahrzeuggeschwindigkeit nicht repräsentieren (z. B. bei Vollbremsung, bei Ansprechen des ABS oder des ESP, oder bei Schleudern des Fahrzeugs), müssen die Signale anderer Sensoren, vorzugsweise von Beschleunigungssensoren, und/oder von einem Sateliten-Navigationssystem zur Ermittlung der Geschwindigkeit herangezogen werden.

In der DE 196 01 444 A ist ein Verfahren zur Ermittlung der Wegimpulszahl eines Tachometergebers unter Verwendung der Daten eines Beschleunigungsgebers beschrieben. Dabei wird bezweckt, die Geberkonstante des Wegimpulsgebers ("Wegimpulszahl"), die von Fahrzeug zu Fahrzeug aufgrund unterschiedlicher Getriebe, Reifengrößen, Reifenabnutzung und Reifen-Innendruck schwankt, Fahrzeug-individuell und fortlaufend korrigieren zu können.

Den beiden zuletzt genannten Verfahren ist gemein, dass zwar Beschleunigungssensoren zur Ermittlung der Geschwindigkeit verwendet werden, jedoch auf die herkömmlichen Sensoren am Getriebe oder an den Rädern nicht verzichtet werden kann.

Aufgabe der Erfindung ist es, ein Verfahren und eine Anordnung zur Fahrzeug-internen Messung des zurückgelegten Weges und der momentanen Geschwindigkeit von Kraftfahrzeugen, die von Verbrennungsmotoren angetrieben werden, vorzusehen, wobei es möglich wird, die Fahrzeuggeschwindigkeit und damit auch den gefahrenen Weg ohne Rückgriff auf die Signale eines am Getriebe oder an mindestens einem der Räder angebrachten Geschwindigkeits- oder Wegimpuls-Gebers zu ermitteln. Die Anordnung soll als autonomes Modul realisierbar sein, jedoch auch in jedes Gerät, das Informationen über Geschwindigkeit und Weg benötigt, integriert werden können. Dadurch soll der Verkabelungsaufwand im Kraftfahrzeug vermindert werden können.

Erfindungsgemäß wird diese Aufgabe durch die Gegenstände der unabhängigen Patentansprüche gelöst. Weitere vorteilhafte Ausführungsformen und Weiterbildungen sind in den Unteransprüchen aufgeführt.

Die erfindungsgemäße Technik beruht auf der Erkenntnis, dass man mit einem im Kraftfahrzeug eingebauten 3D-Beschleunigungssensor nicht nur die Bewegung des Fahrzeuges relativ zur Erdoberfläche erfassen kann, sondern auch die Bewegungen der Kolben des das Kraftfahrzeug antreibenden Verbrennungsmotors, und dass im Fall eines Stufengetriebes eine feste Abhängigkeit zwischen jeweiliger Drehzahl und Fahrzeuggeschwindigkeit gegeben ist, was zur genauen Berechnung der Fahrzeuggeschwindigkeit und in der Folge des Fahrzeugweges genützt werden kann. Beide Bewegungen, die Kolbenbewegungen und die Fahrzeugbewegungen, erzeugen im zeitlichen Verlauf des Sensor-Ausgangssignals charakteristische Muster, die sich beispielsweise nach Transformation in den Frequenzbereich als charakteristische Spektralanteile darstellen. Da sich die Charakteristika beider Bewegungen stark voneinander unterscheiden, können die Signale abhängig von der Ursache der am Sensor auftretenden Beschleunigung durch geeignete Filter bzw. Filter-Algorithmen voneinander getrennt werden. In grober Näherung kann man davon ausgehen, dass niederfrequente Signalanteile von Beschleunigungs- und Bremsvorgängen des Fahrzeuges herrühren. Aus diesen Signalanteilen kann in an sich herkömmlicher Weise auf die Geschwindigkeit und auf den gefahrenen Weg geschlossen werden. Die höherfrequenten Signalanteile rühren im Wesentlichen von den Kolbenbewegungen im Motor her. Bei Kenntnis der Zylinderzahl des Motors kann daraus auf die momentane Drehzahl des Motors geschlossen werden. (Eine dritte Gruppe von Signalanteilen hat seinen Ursprung in Fahrbahn-Unebenheiten. Diese sind für die erfindungsgemäße Technik uninteressant und können durch geeignete Filterverfahren eliminiert werden.)

Sofern das Kraftfahrzeug kein stufenloses Getriebe besitzt, kann dann aus der Motor-Drehzahl und aus einer zum jeweils eingelegten Gang gehörenden Konstanten (Untersetzungsfaktor) die Geschwindigkeit immer dann - und zwar sehr genau - berechnet werden, wenn die Kupplung nicht betätigt ist und sich das Fahrzeug in einem "normalen" Fahrzustand befindet, also die angetriebenen Räder auf der Fahrbahn rollen und nicht gleiten. Die zu den einzelnen Gängen gehörenden Konstanten (Untersetzungsfaktoren) sind für jedes Fahrzeug ermittelbar bzw. bekannt. Sie hängen vor allem vom Gesamt-Untersetzungsverhältnis der einzelnen Gänge im Kraftfluss vom Motor bis zu den Rädern ab, sind insofern also für jeden Fahrzeugtyp bekannt. Weitere Einfluss-Faktoren, die sich jedoch nur relativ gering auswirken, sind die Reifengröße, die Abnutzung der Reifen und der Reifeninnendruck. Die Untersetungsfaktoren können auch im Zuge einer Anfangs-Kalibrierung, z. B. auf einem Prüfstand in waagerechter Lage, für bestimmte Reifengrößen ermittelt werden.

Im Hinblick auf die Erfassung der Kolbenbewegungen im Motor und die Auswertung der höherfrequenten Signalanteile ist es auch einfach möglich, einen etwaigen Motorstillstand festzustellen. Für den Fall, dass der Fahrzeugmotor ausgeschaltet sein und das Kraftfahrzeug bergab rollen sollte, kann - wenn auch hierfür die Fahrzeuggeschwindigkeit erfasst werden soll - zusätzlich ein Lage-Sensor vorgesehen werden.

Die vorliegende Anordnung benötigt im einfachsten Fall nur einen Anschluss zur Stromversorgung, sie kann jedoch ebenfalls an die Zündung und an eine GPS-Einheit angeschlossen werden, um auch hier einen Informationsaustausch zu nutzen. Weiters kann eine Service-Schnittstelle für Kalibrierungszwecke vorgesehen werden.

Für eine genaue, störungsfreie Erfassung der Drehzahl des Verbrennungsmotors des Fahrzeuges können niederfrequente Signalanteile weggefiltert werden und nur die vergleichsweise hochfrequenten Signalanteile der Drehzahlermittlung zugrunde gelegt werden, um so tatsächlich nur die Kolbenbewegungen bzw. damit verbundene Beschleunigungsvorgänge, und nicht Fahrzeugbewegungen selbst in die Drehzahlermittlung einzubeziehen. Parallel zu dieser Technik der Geschwindigkeits- und Wegermittlung auf Basis von hochfrequenten Kolbenbewegungen, aus denen auf die Motor-Drehzahl geschlossen wird, aus welcher wiederum die Fahrzeuggeschwindigkeit (im eingekuppelten Zustand) ermittelt wird, kann auch in an sich herkömmlicher Weise die ungefähre Geschwindigkeit des Fahrzeuges durch einfache Integration des Längsachsen-Signals des Beschleunigungssensors ermittelt werden, wobei hieraus durch weitere Integration auch die jeweils gegebene ungefähre Wegstrecke berechnet werden kann. Diese Etwa-Geschwindigkeit wird in dem Fall der endgültigen Wegerfassung zugrunde gelegt, wenn die Kupplung des Fahrzeuges betätigt und somit der Kraftfluss vom Motor zu den Rädern unterbrochen sein sollte, da dann kein gültiger Schluss von der Kolbenbewegung bzw. Motor-Drehzahl auf die Fahrzeuggeschwindigkeit möglich ist. Die Etwa-Geschwindigkeit kann auch dann mit Vorteil genützt werden, wenn die Kupplung nicht betätigt wurde und somit ein Kraftfluss vom Motor bis zu den Rädern gegeben ist: In diesem Fall kann die ermittelte Motor-Drehzahl, berichtigt um das vorgegebene Untersetzungsverhältnis, mit der Etwa-Geschwindigkeit in Relation gesetzt werden, um so den eingelegten Gang festzustellen. Danach kann die genaue Geschwindigkeit aus der jeweiligen Gang-Konstante und der Drehzahl ermittelt werden. Hierzu werden beispielsweise in Kraftfahrzeugen mit Automatikgetriebe elektronisch abgelegte Gang-Kennlinien verwendet, wie sie zum automatischen Auslösen von Schaltvorgängen abhängig von der Motor-Drehzahl verwendet werden.

Der Kupplungsstatus kann beispielsweise dadurch ermittelt werden, dass im Fall eines Fahrzeuges mit Schaltgetriebe dem Kupplungspedal ein Pedalsensor zugeordnet wird, und im Fall eines automatischen Stufengetriebes ein die Schaltvorgänge im automatischen Getriebe erfassender Sensor vorgesehen wird.

Für die Ermittlung der Motor-Drehzahl aus den hochfrequenten Signalen bzw. Signalanteilen des Beschleunigungssensors kann die Technik der schnellen Fouriertransformation eingesetzt werden, dh es wird ein FFT-(Fast Fourier Transformation-)Modul eingesetzt und dem Beschleunigungssensor nachgeordnet, um so im Frequenzbereich die charakteristischen Spektralanteile zu erhalten, die zur jeweiligen Drehzahl führen.

Mit der erfindungsgemäßen Technik können bei einem Kraftfahrzeug, das von einem Verbrennungsmotor angetrieben wird, und das über ein Stufengetriebe mit Handschaltung oder mit Automatik verfügt, auf außerordentlich genaue Weise die zurückgelegten Wegstrecken ermittelt werden. Dadurch sind auch dann, wenn auf Fahrwegen kein GPS-Empfang gegeben sein sollte, genaue Positionsbestimmungen des Fahrzeuges möglich. Dies ist vor allem bei automatischen Mauteinhebungssystemen von Vorteil, und es ist auch denkbar, die vorliegende Technik mit dem 3D-Beschleunigungssensor, dem FFT-Modul und einem Verarbeitungsmodul zum Ermitteln der Fahrzeuggeschwindigkeit aus der Motor-Drehzahl im fahrzeugeigenen Mautgerät, der so genannten OBU (On Board Unit) einzubauen.

Die Erfindung wird nun nachstehend anhand von bevorzugten Ausführungsbeispielen, auf die sie jedoch nicht beschränkt sein soll, und unter Bezugnahme auf die Zeichnung noch weiter erläutert. In der Zeichnung zeigen im Einzelnen:
Fig. 1 ein Blockschaltbild einer zur Durchführung des Verfahrens zur Ermittlung der Fahrzeuggeschwindigkeit bzw. des Fahrzeugweges vorgesehenen Anordnung;
Fig. 2 ein schematisches Beispiel für ein Kennlinien-Diagramm: Drehzahl über der Geschwindigkeit eines Kraftfahrzeuges; und
Fig. 3 ein gegenüber Fig. 1 etwas modifiziertes Blockschaltbild einer besonders vorteilhaften Anordnung zur Ermittlung von Geschwindigkeit und Weg eines Kraftfahrzeuges.

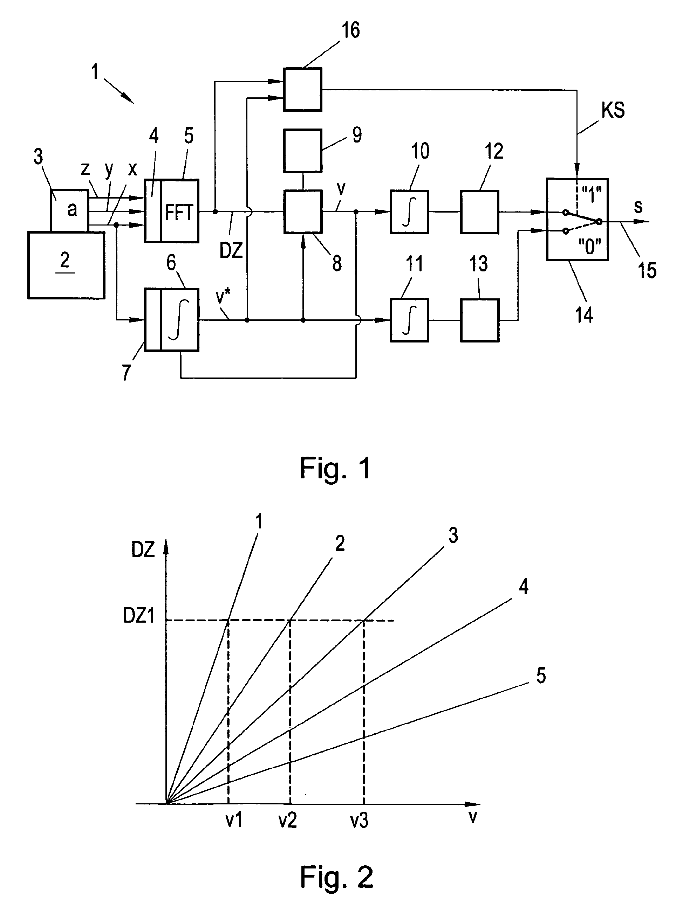

In Fig. 1 ist schematisch in Form eines Blockschaltbildes eine Anordnung 1 zum Ermitteln der Geschwindigkeit v und des Weges s eines nicht näher veranschaulichten Kraftfahrzeuges gezeigt, welches von einem Verbrennungsmotor 2 angetrieben wird, welcher nur ganz schematisch in Fig. 1 angedeutet ist, wobei ein 3D-Beschleunigungssensor 3 als wesentlicher Teil der vorliegenden Anordnung 1 diesen Verbrennungsmotor 2 zwecks Erfassung der Kolbenbewegungen des Motors 2 zugeordnet ist. Der Beschleunigungssensor oder -geber 3 erfasst in x-, y- und z-Richtung Beschleunigungswerte, wobei angenommen die x-Richtung die Längsrichtung oder Längsachse des Kraftfahrzeuges, die y-Richtung die Querrichtung und die z-Richtung die Höhenrichtung ist. Die x-, y- und z-Signale des Beschleunigungssensors 3 werden, bevorzugt über ein Filtermodul 4, als Mittel 5 zur Ermittlung der Drehzahl DZ aus den hochfrequenten Beschleunigungssensor-Signalen, hier in Form eines FFT-Moduls 5, zugeführt. Das Filtermodul 4 filtert niederfrequente Signalanteile aus, die von den Bewegungen des Fahrzeuges selbst herrühren, wenn es sich auf einer Fahrbahn bewegt. Die vergleichsweise hochfrequenten Signalanteile rühren dagegen von den Kolbenbewegungen im Motor 2 her, die in einer vorgegebenen Beziehung zur Motordrehzahl stehen, wobei eindeutig auf diese Drehzahl DZ geschlossen werden kann, da die Anzahl der Motorzylinder bekannt ist und demgemäß bei der Ermittlung der Drehzahl DZ berücksichtigt werden kann.

Parallel zum FFT-Modul 5 wird der x-Signalanteil des Beschleunigungssensors 3 einem Integrierglied 6 zugeführt, und zwar bevorzugt wiederum über ein Filtermodul 7, hier jedoch mit dem Zweck, nur die vergleichsweise niederfrequenten Signalanteile der Integration im Integrierglied 6 zuzuführen. Auf diese Weise wird hier eine Etwa-geschwindigkeit v* des Fahrzeuges aufgrund der Fahrzeugbeschleunigungen und -bremsungen durch Integrieren, wie an sich herkömmlich, ermittelt. Diese Geschwindigkeitsermittlung ist jedoch noch relativ ungenau und wird bei der erfindungsgemäßen Technik nur hilfsweise in die Berechnungsvorgänge miteinbezogen.

Das FFT-Modul 5 ist mit seinem Ausgang an einen Eingang einer als Mittel 8 zur Berechnung der Fahrzeug-Geschwindigkeit v aus der zuvor ermittelten Motor-Drehzahl DZ vorgesehene Verarbeitungseinheit 8 angelegt. Diese Verarbeitungs- oder Prozessoreinheit 8 erhält an einem weiteren Eingang das Signal betreffend die Geschwindigkeit v* am Ausgang des Integriergliedes 6 zugeführt; weiters greift diese Einheit 8 auf einen Speicher 9 zu, in dem, beispielsweise in Tabellenform, Fahrzeugkennwerte bzw. Motorkennwerte, nämlich insbesondere betreffend die Zuordnung von Drehzahl und Geschwindigkeit bzw. betreffend Schaltkennlinien, vgl. auch Fig. 2, abgespeichert sind. Dadurch kann die Einheit 8 aufgrund der Etwa-Geschwindigkeit v* am Ausgang des Integriergliedes 6 und durch In-Beziehung-Setzen dieser ungefähren Geschwindigkeit v* zur Motordrehzahl DZ, die gegebenenfalls bereits mit einem Untersetzungsfaktor, der für das Fahrzeug bekannt und typisch ist, multipliziert wurde, den gerade eingelegten Gang ermitteln, bzw. kann dann über die im Speicher 9 abgespeicherten Gangkennlinien, die genaue Geschwindigkeit v der ermittelten Drehzahl DZ zugeordnet werden.

In Fig. 2 ist in einem Diagramm schematisch die Zuordnung von Drehzahl DZ und genauer Fahrzeuggeschwindigkeit v über fünf Gang-Kennlinien - Nr. 1 bis Nr. 5 - ersichtlich, wobei für eine bestimmte Drehzahl DZ1 je nach Gang (1. Gang, 2. Gang oder 3. Gang) eine zugehörige Geschwindigkeit v1, v2 oder v3 festgestellt werden kann.

Das Geschwindigkeitssignal v wird sodann an ein Integrierglied 10 angelegt, ebenso wie das Geschwindigkeits-Ausgangssignal v* des Integriergliedes 6, welches die Etwa-Geschwindigkeit des Fahrzeuges repräsentiert, an ein Integrierglied 11 angelegt wird. Dadurch wird durch Integration des Geschwindigkeitssignals v bzw. v* nunmehr ein Wegsignal s bzw. s* erhalten; in zugehörigen Impulsstufen (12 bzw. 13) wird schließlich ein Impulssignal abgeleitet, das am Ausgang vier Impulse pro Meter Wegstrecke, gemäß einem üblichen Standard, abgibt, um den Weg zu zählen.

Die Ausgänge der Impulsstufen 12 und 13 sind an Eingänge eines Schaltmittels 14 gelegt, welches je nach Kupplungsstatus den Ausgang der Impulsstufe 12 oder jenen der Impulsstufe 13 zu einem Ausgang 15 der gesamten Anordnung 1 durchschaltet. Diesem Schaltmittel 14 wird dabei ein Kupplungsstatus-Signal KS ("1" oder "0", je nachdem ob die Kupplung nicht betätigt ist und ein voller Kraftfluss vom Motor zu den Rädern gegeben ist, oder aber ob die Kupplung betätigt ist), übermittelt. Dieses Kupplungsstatus-Signal KS wird von einem Geber 16 erhalten, der beispielsweise einem Kupplungspedal oder im Fall eines automatischen Stufengetriebes letzterem zugeordnet sein kann (nicht dargestellt), der aber auch aufgrund der Drehzahl-Signale DZ und der Etwa-Geschwindigkeit v* des Fahrzeuges darauf schließen kann, ob die Kupplung betätigt ist oder nicht.

Wenn man berücksichtigt, dass die Drehzahl DZ beispielsweise 100 oder einige wenige hundert Upm bis zu 10000 Upm betragen kann, so ergibt sich, dass für das FFT-Modul 5 eine Abtastrate von beispielsweise 512 Hertz ausreichend sein kann.

Die in der vorstehend beschriebenen Fig. 1 erläuterten Komponenten 3 bis 14 können als eigene Bauteile vorliegen, sie können jedoch selbstverständlich auch durch einen Mikroprozessor oder Mikrocomputer realisiert sein.

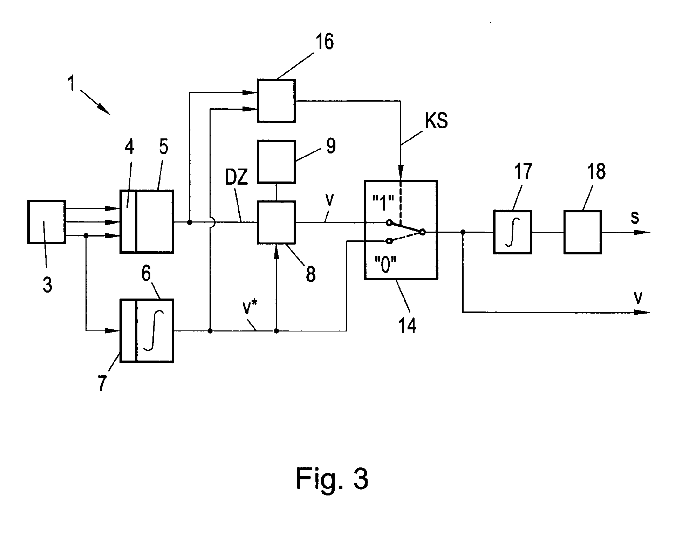

In Fig. 3 ist eine Abwandlung der Anordnung 1 gemäß Fig. 1 insofern veranschaulicht, als das Schaltmittel 14 hier unmittelbar an die Ausgänge der Einheiten 8 und 6 angeschaltet ist. Dadurch genügt es, ein einziges Integrierglied 17 und eine einzige Impulsstufe 18 vorzusehen, um aus dem Geschwindigkeitssignal (v oder v*) am Ausgang des Schaltmittels 14 das Weg-Impulssignal s zu gewinnen. Die übrigen Komponenten 3-9 und 16 entsprechen jenen der Anordnung 1 von Fig. 1, so dass diesbezüglich auf die vorhergehende Beschreibung zu verweisen ist.

Außer den internen Informationen betreffend Fahrstufe (Gang) und Kupplungsstatus (1 = voller Kraftfluss, 0 = getrennt) können - was aber in der Zeichnung nicht dargestellt ist - einige weitere interne Signale bzw. Informationen in der Anordnung 1 vorliegen, wie etwa ein Signal betreffend die Lageabweichung vorne/hinten bzw. links/rechts und ein Fahrtrichtungs-Signal bezogen auf die Fahrzeugslängsachse (Vorwärtsfahrt/Rückwärtsfahrt, evtl. Kurve); auch kann eine Information verfügbar sein, die den Zustand beschreibt, ob das Fahrzeug fährt oder aber steht.

## Patentansprüche

1. Verfahren zur Fahrzeug-internen Ermittlung eines von einem Fahrzeug, das von einem Verbrennungsmotor angetrieben wird und ein Stufengetriebe aufweist, zurückgelegten Weges, wobei Beschleunigungswerte mit Hilfe eines vorzugsweise dreidimensionalen Beschleunigungssensors erfasst und daraus unter Anwendung von Signal-Integration der Weg berechnet wird, **dadurch gekennzeichnet, dass** mit Hilfe des Beschleunigungssensors die Kolbenbewegungen des Verbrennungsmotors, gegebenenfalls zusätzlich zu den Bewegungen des Fahrzeuges, erfasst werden und aus diesen vergleichsweise hochfrequenten Signalen zufolge der Kolbenbewegungen die jeweilige Motor-Drehzahl (DZ) ermittelt wird, von der mit Hilfe der Gangzahl bzw. über Getriebe-Kennlinien die Fahrzeug-Geschwindigkeit (v) ermittelt wird, aus der schließlich durch Integration der Weg (s) berechnet wird.

2. Verfahren nach Anspruch 1, **dadurch gekennzeichnet, dass** vor der Ermittlung der Drehzahl (DZ) niederfrequente Signalanteile aus dem Ausgangssignal des Beschleunigungssensors weggefiltert werden.

3. Verfahren nach Anspruch 1 oder 2, **dadurch gekennzeichnet, dass** während der Fahrt des Fahrzeuges der Kupplungsstatus (KS) erfasst wird, wobei bei vollem Kraftfluss der Weg (s) auf Basis der Kolbenbewegungen und über die Drehzahl (DZ) des Motors des Fahrzeuges, im ausgekuppelten Zustand jedoch durch zweimaliges integrieren von niedrigerfrequenten Signalanteilen des Beschleunigungssensors, die den Fahrzeugbewegungen zumindest in Längsrichtung entsprechen, ermittelt wird.

4. Verfahren nach einem der Ansprüche 1 bis 3, **dadurch gekennzeichnet, dass** die Motor-Drehzahl (DZ) aus hochfrequenten Signalen des Beschleunigungssensors über eine schnelle Fouriertransformation ermittelt wird.

5. Verfahren nach einem der Ansprüche 1 bis 4, **dadurch gekennzeichnet, dass** die Gangzahl aus der Relation der Motor-Drehzahl (DZ), multipliziert mit einem Fahrzeug-typischen Untersetzungsfaktor, zur ungefähren Fahrzeug-Geschwindigkeit (V*), die durch einfache Integration der niederfrequenten Signalanteile des Beschleunigungssensors erhalten wird, ermittelt wird.

6. Anordnung (1) zur Fahrzeug-internen Ermittlung eines von einem Fahrzeug, das von einem Verbrennungsmotor (2) angetrieben wird und ein Stufengetriebe aufweist, zurückgelegten Weges(S), mit einem vorzugsweise dreidimensionalen Beschleunigungssensor (3) und mit Integriermitteln (6, 11, 10) zur Berechnung des Weges auf Basis der Beschleunigungs-Signale, **dadurch gekennzeichnet, dass** der Beschleunigungssensor (3) dem Motor (2) des Fahrzeuges zugeordnet ist, um die Kolbenbewegungen des Motors, gegebenenfalls zusätzlich zu den Bewegungen des Fahrzeuges, zu erfassen, und dass dem Beschleunigungssensor (3) Mittel (5) zum Ermitteln der Motor-Drehzahl (DZ) aus den vergleichsweise hochfrequenten Signalen des Beschleunigungssensors (3) sowie Mittel (8) zur Berechnung der Fahrzeug-Geschwindigkeit (v) aus der so ermittelten Motor-Drehzahl (DZ) unter Einbeziehung der Gangzahl bzw. von Getriebe-Kennlinien nachgeschaltet sind, deren Ausgang an den Eingang eines Integriergliedes (10) zwecks Berechnung des Weges (s) gelegt ist.

7. Anordnung nach Anspruch 6, **gekennzeichnet durch** Filtermittel (4) zwischen dem Beschleunigungssensor (3) und den Mitteln (5) zur Motor-Drehzahl-Ermittlung, um niederfrequente Signale auszufiltern und nur die vergleichsweise hochfrequenten Signale der Drehzahl-Ermittlung zugrunde zu legen.

8. Anordnung nach Anspruch 6 oder 7, **gekennzeichnet durch** einen Kupplungsstatus-Geber (16) und **durch** mit diesem verbundene Schaltmittel (14) zum Umschalten auf einen Wegermittlungsmodus, bei dem der Weg **durch** zweimaliges Integrieren von niederfrequenten Signalen des Beschleunigungssensors (3), die den Fahrzeugbewegungen zumindest in Längsrichtung entsprechen, ermittelt wird, im Fall eines ausgekuppelten Zustands (KS = 0).

9. Anordnung nach einem der Ansprüche 6 bis 8, **dadurch gekennzeichnet, dass** die Mittel (5) zum Ermitteln der Motor-Drehzahl (DZ) ein FFT (Fast Fourier Transformation)-Modul (5) enthalten.

10. Anordnung nach einem der Ansprüche 6 bis 9, **dadurch gekennzeichnet, dass** die Mittel (8) zur Berechnung der Fahrzeug-Geschwindigkeit eingerichtet sind, die Gangzahl aus der Relation der Motor-Drehzahl (DZ), multipliziert mit einem Fahrzeug-typischen Untersetzungsfaktor, zur ungefähren Fahrzeug-Geschwindigkeit (v*), die durch einfache Integration der niederfrequenten Signalanteile des Beschleunigungssensors (3) erhalten wird, zu ermitteln.
